(19) Europäisches Patentamt / European Patent Office / Office européen des brevets

(11) **EP 3 493 312 A1**

(12) **EUROPEAN PATENT APPLICATION**
published in accordance with Art. 153(4) EPC

(43) Date of publication:
**05.06.2019 Bulletin 2019/23**

(21) Application number: **17833818.2**

(22) Date of filing: **25.05.2017**

(51) Int Cl.:
*H01M 8/16* (2006.01)          *H01M 4/96* (2006.01)
*H01M 8/02* (2016.01)

(86) International application number:
**PCT/JP2017/019489**

(87) International publication number:
**WO 2018/020807 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **26.07.2016   JP 2016146195**

(71) Applicant: **Panasonic Corporation**
**Kadoma-shi, Osaka 571-8501 (JP)**

(72) Inventors:
• **YOSHIKAWA, Naoki**
  **Osaka-shi, Osaka 540-6207 (JP)**
• **KURAHATA, Kota**
  **Osaka-shi, Osaka 540-6207 (JP)**
• **KAMAI, Ryo**
  **Osaka-shi, Osaka 540-6207 (JP)**

(74) Representative: **Müller-Boré & Partner**
**Patentanwälte PartG mbB**
**Friedenheimer Brücke 21**
**80639 München (DE)**

(54)   **MICROBIAL FUEL CELL**

(57)   A microbial fuel cell (1) includes: a negative electrode (10) composed of a carbon material (11) formed by laminating a plurality of graphenes (12) on one another, in which an area of exposed surfaces of the carbon material, the exposed surfaces going along a lamination direction (X) of the graphenes, with respect to a volume of the carbon material is $1.0 \times 10^{-5}$ to 20 cm$^2$/cm$^3$; and a positive electrode (20) facing the negative electrode. Then, the negative electrode and the positive electrode are immersed in an electrolysis solution (70), and at least a part of the positive electrode is exposed to a gas phase (2).

FIG. 5

EP 3 493 312 A1

**Description**

TECHNICAL FIELD

The present invention relates to a microbial fuel cell. More specifically, the present invention relates to a microbial fuel cell capable of purifying wastewater and generating electrical energy.

BACKGROUND ART

In recent years, a microbial fuel cell that generates power using biomass as sustainable energy has attracted attention. The microbial fuel cell is a device that converts organic matter or the like into electrical energy using a metabolic capacity of microbes. The microbial fuel cell is an excellent system capable of collecting energy while treating organic matter. However, power generated by the microbes is extremely small, and a density of an electric current to be output is low, and therefore, the microbial fuel cell needs a further improvement.

As such a microbial fuel cell, a microbial fuel cell provided with an electrode increasing an attached amount of the microbes is disclosed (refer to Patent Literature 1). Patent Literature 1 discloses an electrode including at least two types of pores in which an average pore size of pores having the largest average pore size is 50 $\mu$m < Rmax $\leq$ 1.5 cm and an average pore size of pores having the smallest average pore size is 10 $\mu$m < Rmin $\leq$ 50 $\mu$m. The at least two types of pores are provided in an inside of a substrate of the electrode or on a surface thereof. Moreover, Patent Literature 1 also discloses that a substrate formed by firing and carbonizing nonwoven cellulose fabric is used as such an electrode substrate.

CITATION LIST

PATENT LITERATURE

Patent Literature 1: Japanese Unexamined Patent Application Publication No. 2014-93185

SUMMARY OF INVENTION

However, since the electrode substrate of Patent Literature 1 is formed of nonwoven fabric, the electrode substrate has many contacts among pieces of carbon fiber and has low electric conductivity. Therefore, it has been apprehended that an output of the microbial fuel cell may decrease.

The present invention has been made in consideration of such a problem as described above, which is inherent in the prior art. It is an object of the present invention to provide a microbial fuel cell capable of increasing electric conductivity of electrodes and enhancing an output by power generation.

In order to solve the above problem, a microbial fuel cell according to an aspect of the present invention includes: a negative electrode composed of a carbon material formed by laminating a plurality of graphenes on one another, in which an area of exposed surfaces of the carbon material, the exposed surfaces going along a lamination direction of the graphenes, with respect to a volume of the carbon material is $1.0 \times 10^{-5}$ to 20 cm$^2$/cm$^3$; and a positive electrode facing the negative electrode. Then, the negative electrode and the positive electrode are immersed in an electrolysis solution, and at least a part of the positive electrode is exposed to a gas phase.

BRIEF DESCRIPTION OF DRAWINGS

Fig. 1 is a schematic perspective view showing an example of a microbial fuel cell according to an embodiment of the present invention.
Fig. 2 is a cross-sectional view taken along a line A-A in Fig. 1.
Fig. 3 is a schematic plan view showing the example of the microbial fuel cell according to the embodiment of the present invention.
Fig. 4 is an exploded perspective view showing a fuel cell unit in the above microbial fuel cell.
Fig. 5(a) is a perspective view showing an example of a carbon material that constitutes a negative electrode in the microbial fuel cell. Fig. 5(b) is a cross-sectional view taken along a line B-B in Fig. 5(a).
Fig. 6(a) is a perspective view showing another example of the carbon material that constitutes the negative electrode in the microbial fuel cell. Fig. 6(b) is a cross-sectional view taken along a line C-C in Fig. 6(a).
Fig. 7 is a schematic view showing examples of a shape of through holes provided in the carbon material.

Fig. 8 is a graph showing evaluation results for test pieces of Reference example and Reference comparative example by cyclic voltammetry.

Fig. 9 is a graph showing relationships between output densities and electric current densities in microbial fuel cells of Example 1 and Comparative example 1.

Fig. 10 is a picture showing a graphite sheet in Example 2, in which an exposed surface area is 0.36 $cm^2/cm^3$ and an aperture ratio is 0%.

Fig. 11 is a picture showing a graphite sheet in Example 2, in which an exposed surface area is 0.38 $cm^2/cm^3$ and an aperture ratio is 0.3%.

Fig, 12 is a picture showing a graphite sheet in Example 2, in which an exposed surface area is 0.48 $cm^2/cm^3$ and an aperture ratio is 1.3%.

Fig. 13 is a picture showing a graphite sheet in Example 2, in which an exposed surface area is 0.82 $cm^2/cm^3$ and an aperture ratio is 5.1%.

Fig. 14 is a picture showing a graphite sheet in Example 2, in which an exposed surface area is 1.26 $cm^2/cm^3$ and an aperture ratio is 10%.

Fig. 15 is a picture showing a graphite sheet in Example 2, in which an exposed surface area is 2.32 $cm^2/cm^3$ and an aperture ratio is 22%.

Fig. 16 is a picture showing a graphite sheet in Example 2, in which an exposed surface area is 1.07 $cm^2/cm^3$ and an aperture ratio is 42%.

Fig. 17 is a picture showing a graphite sheet in Example 2, in which an exposed surface area is 0.81 $cm^2/cm^3$ and an aperture ratio is 68%.

Fig. 18 is a graph showing a relationship between an average steady output and the exposed surface area in the microbial fuel cell of Example 2.

DESCRIPTION OF EMBODIMENTS

Hereinafter, a detailed description will be given of a microbial fuel cell according to this embodiment. Note that dimensional ratios in the drawings are exaggerated for convenience of explanation, and are sometimes different from actual ratios.

[Microbial fuel cell]

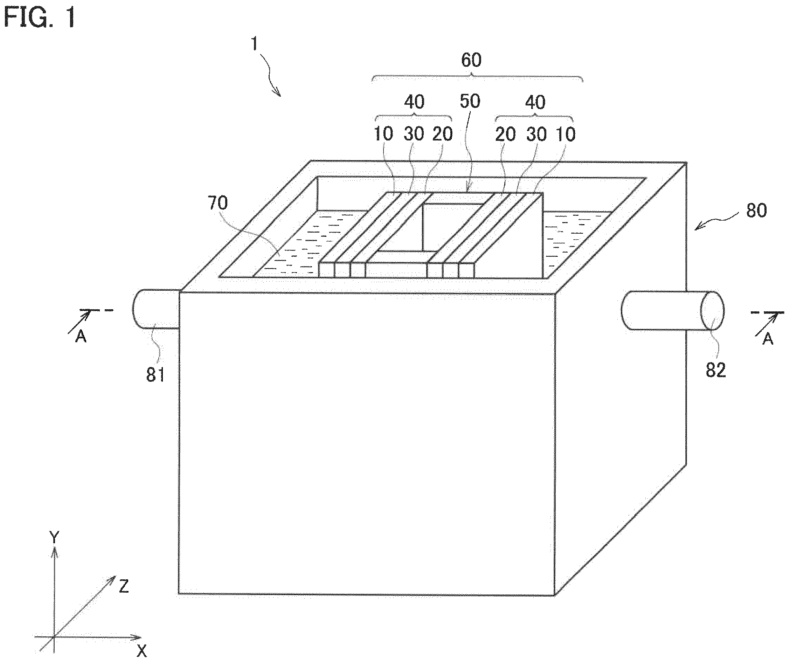

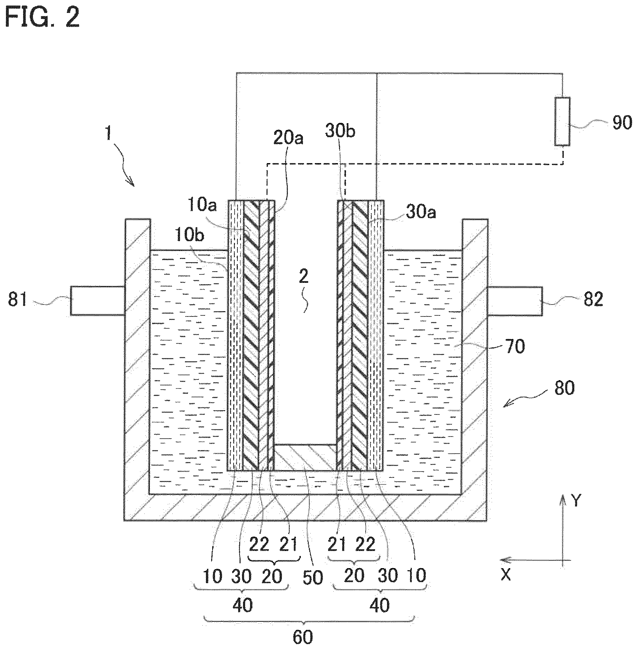

As shown in Fig. 1 to Fig. 3, a microbial fuel cell 1 according to this embodiment includes a plurality of electrode assemblies 40, each of which is composed of a negative electrode 10, a positive electrode 20 and an ion transfer layer 30. In the microbial fuel cell 1, as shown in Fig. 2, each of the negative electrodes 10 is disposed so as to contact one surface 30a of the ion transfer layer 30, and each of the positive electrodes 20 is disposed so as to contact a surface 30b of the ion transfer layer 30, which is opposite with the surface 30a.

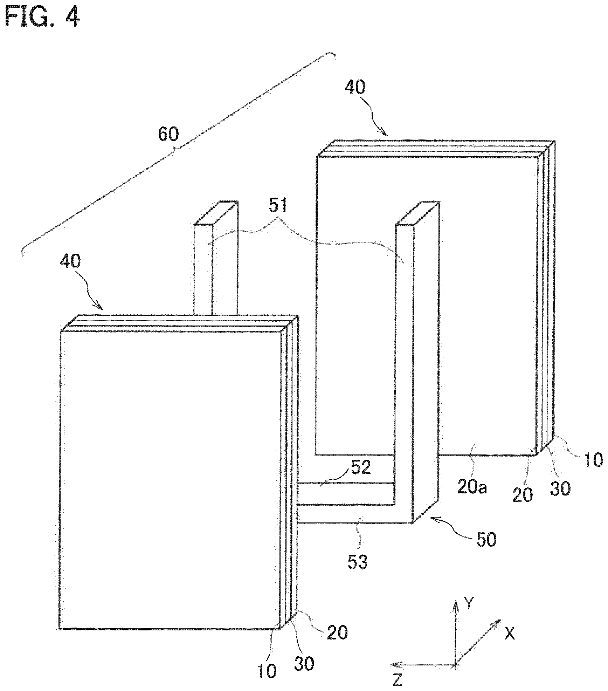

Moreover, as shown in Fig. 4, such two electrode assemblies 40 are laminated on each other via a cassette substrate 50 so that the positive electrodes 20 face each other. The cassette substrate 50 is a U-shaped frame member that goes along outer peripheral portions of the surface 20a in the positive electrodes 20. An upper portion of the cassette substrate 50 is open. That is, the cassette substrate 50 is a frame member in which bottom surfaces of two first columnar members 51 are coupled to each other by a second columnar member 52. Then, side surfaces 53 of the cassette substrate 50 are joined to the outer peripheral portions of the surfaces 20a of the positive electrodes 20, whereby an electrolysis solution 70 that is a liquid to be treated can be prevented from leaking to an inside of the cassette substrate 50 from the outer peripheral portions of the surfaces 20a of the positive electrodes 20.

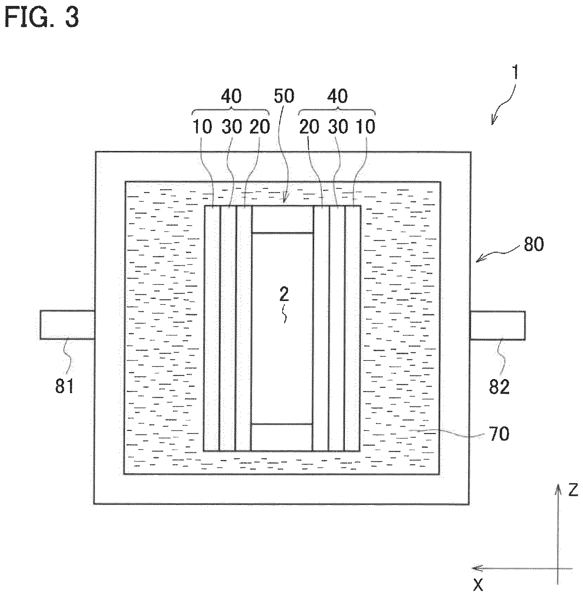

Then, as shown in Fig. 2 and Fig. 3, a fuel cell unit 60 formed by laminating the two electrode assemblies 40 and the cassette substrate 50 on one another is disposed in an inside of a wastewater tank 80 so that a gas phase 2 communicating with the atmosphere is formed. The electrolysis solution 70 is held in the inside of the wastewater tank 80, and the negative electrodes 10, the positive electrodes 20 and the ion transfer layers 30 are immersed in the electrolysis solution 70.

As described later, each of the positive electrodes 20 includes a water-repellent layer 21 having water repellency. Therefore, the electrolysis solution 70 held in the inside of the wastewater tank 80 and the inside of the cassette substrate 50 are separated from each other, and the gas phase 2 is formed in an inner space formed of the two electrode assemblies 40 and the cassette substrate 50. Then, as shown in Fig. 2, the negative electrodes 10 and the positive electrodes 20 are electrically connected individually to an external circuit 90.

(Negative electrodes)

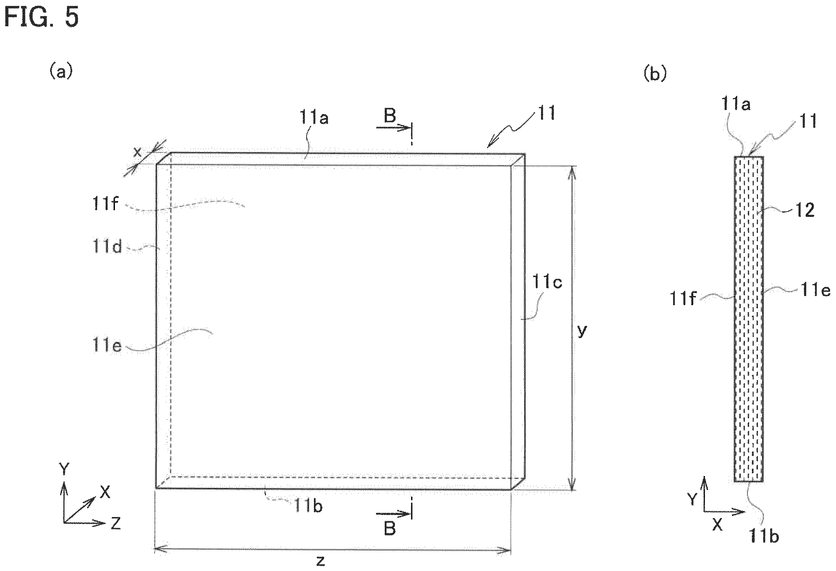

As shown in Fig. 5(a), each of the negative electrodes 10 in this embodiment includes a sheet-shaped carbon material 11 formed by laminating a plurality of graphenes on one another. As shown in Fig. 5(b), in the carbon material 11, the graphenes 12 are laminated on one another along a thickness direction (X-direction) of the carbon material 11, and carbon hexagonal net surfaces of the graphenes are arrayed along a plane direction (YZ-direction) of the carbon material 11. Then, the graphenes have strong bonding between carbon atoms, and accordingly, the carbon material 11 has high electric conductivity in the plane direction (YZ-direction) while having high corrosion resistance.

It is preferable that the carbon material 11 be a graphite sheet. The graphite sheet is a sheet formed of graphite. The graphite sheet has high corrosion resistance and has electrical resistivity equivalent to that of metal materials, and accordingly, makes durability and electric conductivity compatible with each other. The graphite sheet as described above can be obtained as follows for example. First, natural graphite is subjected to chemical treatment by acid, and inserts are formed in inter-layer spaces between graphenes 12 of the graphite. Next, this is rapidly heated, whereby expanded graphite is obtained in which the inter-layer spaces between the graphenes are stretched and expanded by a gas pressure caused by thermal decomposition of such interlayer inserts. Then, this expanded graphite is pressurized and rolled, whereby the graphite sheet is obtained. When the graphite sheet thus obtained is used, then as shown in Fig. 5(b), the graphenes in the graphite are arrayed along the plane direction (YZ-direction) perpendicular to the thickness direction (X-direction). Therefore, it becomes possible to increase electric conductivity between the carbon material 11 and the external circuit 90, and to further enhance efficiency of a cell reaction. Moreover, since air gaps are present in the inter-layer spaces of the graphenes 12, the graphite sheet has flexibility. Note that, though the carbon material 11 may be used alone as a negative electrode material, the carbon material 11 may be used while being laminated on or compounded with other materials. The other materials are not particularly limited, but may be electrically conductive porous materials such as carbon felt and metal mesh, or may be insulating porous materials such as woven fabric and nonwoven fabric.

Anaerobic microbes are held in each of the negative electrodes 10. Hydrogen ions and electrons are generated from at least either one of organic matter and a nitrogen-containing compound in the electrolysis solution 70 by a catalytic function of the microbes. Specifically, as shown in Fig. 2, the negative electrode 10 includes one surface 10a and other surface 10b opposite with the one surface 10a. The one surface 10a faces the positive electrode 20 via the ion transfer layer 30, and the anaerobic microbes are held on the other surface 10b. That is, a biofilm including the anaerobic microbes is laminated and fixed onto the other surface 10b of the negative electrode 10, whereby the anaerobic microbes are held on the negative electrode 10. Note that the term "biofilm" generally refers to a three-dimensional structure including a microbial population and an extracellular polymeric substance (EPS) produced by the microbial population. However, the anaerobic microbes may be held on the negative electrode 10 without using the biofilm. Moreover, the anaerobic microbes may be held not only on the surface of the negative electrode 10 but also in the inside thereof.

It is preferable that the anaerobic microbes held by the negative electrode 10 be, for example, electricity-producing bacteria having an extracellular electron transfer mechanism. Specific examples of the anaerobic microbes include Geobacter bacteria, Shewanella bacteria, Aeromonas bacteria, Geothrix bacteria, and Saccharomyces bacteria.

Then, in the negative electrode 10 of this embodiment, an area of exposed surfaces of the carbon material 11 along such a lamination direction X of the graphenes 12 with respect to a volume of the carbon material 11 ([area of exposed surfaces] / [volume of carbon material]) is $1.0 \times 10^{-5}$ to 20 $cm^2/cm^3$. As shown in Fig. 5(a), "the volume of the carbon material 11" can be obtained by multiplying a thickness x, length y and width z of the carbon material 11 by one another. Then, in this description, surfaces of the carbon material 11, the surfaces being exposed to the outside along the lamination direction X of the graphenes 12, are referred to as "exposed surfaces". That is, in the carbon material 11 shown in Fig. 5(a), an upper surface 11a, a lower surface 11b, a right side surface 11c and a left side surface 11d are referred to as the exposed surfaces. Then, the area of the exposed surfaces is referred to as an "exposed surface area", which can be obtained from the thickness x, length y and width z of the carbon material 11. That is, each of the exposed surface areas of the upper surface 11a and the lower surface 11b can be obtained by multiplying the thickness x and the width z by each other, and each of the exposed surface areas of the right side surface 11c and the left side surface 11d can be obtained by multiplying the thickness x and the length y by each other.

In the negative electrode 10, laminated surfaces of the graphenes 12 are exposed to the exposed surfaces of the carbon material 11. Therefore, when the anaerobic microbes are supported on the exposed surface, the electrons generated by the function of the anaerobic microbes can conduct to end portions of the graphenes 12 present inside carbon material 11, and can reach the external circuit 90 through the carbon hexagonal net surfaces of the graphenes 12. That is, since electron conductivity from the anaerobic microbes to the graphenes 12 is increased as the exposed surfaces of the carbon material 11 are larger, it becomes possible to enhance the output of the microbial fuel cell 1.

When the area of the exposed surfaces of the carbon material 11 with respect to the volume thereof ([area of exposed surfaces] / [volume of carbon material]) is $1.0 \times 10^{-5}$ $cm^2/cm^3$ or more, it becomes possible to obtain the effect of enhancing the electron conductivity by the exposed surfaces. Moreover, when the area of the exposed surfaces of the carbon material 11 with respect to the volume thereof is 20 $cm^2/cm^3$ or less, then as described later, a size, number and the like of through holes for increasing the exposed surfaces can be set to appropriate values. Accordingly, it becomes possible to maintain strength of the carbon material 11.

Then, in the negative electrode 10, it is more preferable that the area of the exposed surfaces of the carbon material 11 along the lamination direction X of the graphenes 12 with respect to the volume of the carbon material 11 be 0.4 to 7 $cm^2/cm^3$. By the fact that the area of the exposed surfaces of the carbon material 11 with respect to the volume thereof is 0.4 $cm^2/cm^3$ or more, a supported amount of the anaerobic microbes on the exposed surfaces is increased. Accordingly, it becomes possible to further enhance the electron conductivity. Moreover, by the fact that the area of the exposed surfaces of the carbon material 11 with respect to the volume thereof is 7 $cm^2/cm^3$ or less, it becomes possible to maintain high strength of the carbon material 11 while enhancing the electron conductivity thereof.

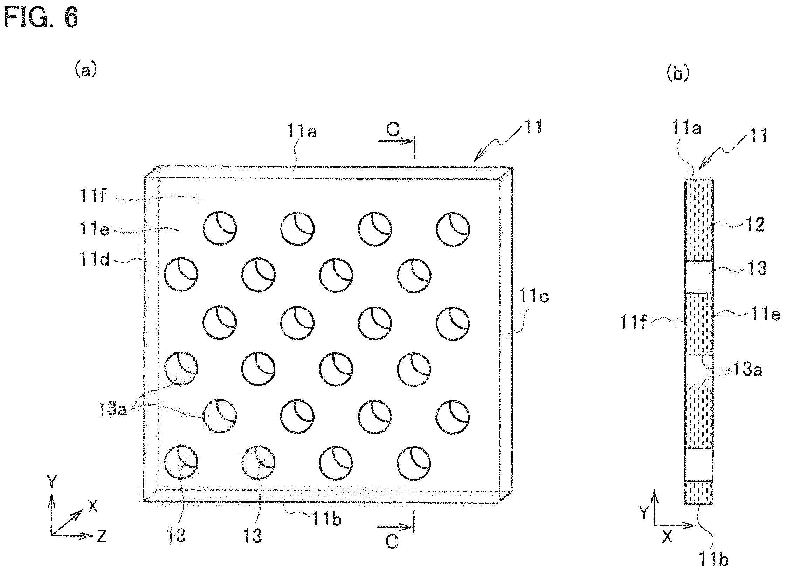

As shown in Fig. 6, it is preferable that the negative electrode 10 have through holes 13 which go along the lamination direction X of the graphenes. Formation of the through holes 13 increases the exposed surfaces of the carbon material 11. Accordingly, a contact ratio of the laminated surfaces of the graphenes 12 and the anaerobic microbes is increased, thus making it possible to further enhance the output of the microbial fuel cell 1. Note that, when the carbon material 11 has the through hole 13, the exposed surface area refers to a total of areas of inner surfaces 13a of the through holes 13 and the areas of the upper surface 11a, the lower surface 11b, the right side surface 11c and the left side surface 11d.

A shape of the through holes 13 is not particularly limited. As shown in Fig. 6, the through holes 13 can be formed as circular holes which penetrate the carbon material 11 along the lamination direction X of the graphenes. Note that, when the through holes 13 are the circular holes, such an exposed surface area of each of the through holes 13 can be obtained by multiplying a circumference length of the through hole 13 and the thickness x of the carbon material 11 by each other.

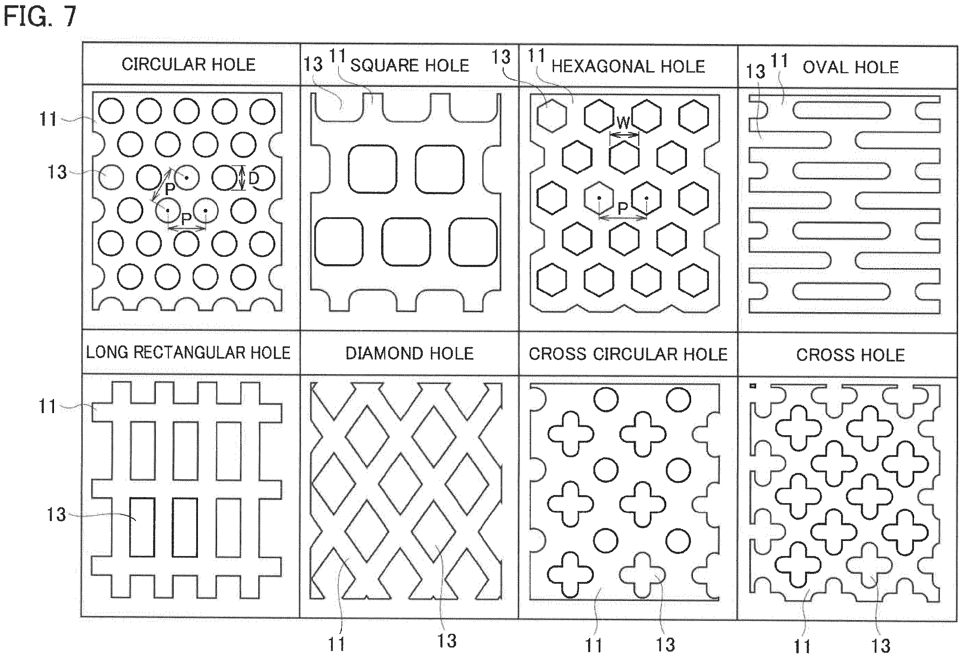

As shown in Fig. 7, the shape of the through holes 13 can be set to at least one selected from the group consisting of the circular hole shape, a square hole shape, a hexagonal hole shape, an oval hole shape, a long rectangular hole shape, a diamond hole shape, a cross circular hole shape and a cross hole shape. Moreover, the through holes can be arrayed in a 60-degree stagger, square-stagger or parallel pattern. Note that the through holes 13 can be formed by punching the carbon material 11.

As shown in Fig. 7, it is preferable that the through holes 13 be formed at an approximately uniform interval in the plane direction (YZ-direction) of the carbon material 11. The intervals between the adjacent through holes 13 are approximately constant, whereby the anaerobic microbes become easy to be approximately uniformly supported on a front surface 11e (the YZ-plane in Fig. 6) of the carbon material 11 and the exposed surfaces thereof. Accordingly, it becomes possible to enhance degradation efficiency of the organic matter and the nitrogen-containing compound in the electrolysis solution 70.

In the negative electrode 10, it is preferable that an aperture ratio of the carbon material 11 having the through hole 13 be 1 to 70%. When the aperture ratio of the carbon material 11 is 1% or more, it becomes easy for the hydrogen ions generated on the surface 10b of the negative electrode 10 shown in Fig. 2 to pass through the through holes 13 and to reach the positive electrode 20. Accordingly, it becomes possible to promote the oxygen reduction reaction and to enhance the output of the microbial fuel cell 1. When the aperture ratio of the carbon material 11 is 70% or less, it becomes possible to suppress the strength of the carbon material 11 from decreasing. Note that, when the through holes 13 are circular holes arrayed in the 60-degree stagger pattern shown in Fig. 7 for example, the aperture ratio can be obtained by the following Equation (1). Moreover, when the through holes 13 are hexagonal holes arrayed in the 60-degree stagger pattern shown in Fig. 7, the aperture ratio can be obtained by the following Equation (2).

$$\text{Aperture ratio (\%)} = 90.6 \times D^2/P^2 \qquad (1)$$

$$\text{Aperture ratio (\%)} = W^2/P^2 \times 100 \qquad (2)$$

As mentioned above, it is preferable that the carbon material 11 be provided with the through holes 13 which completely penetrate the carbon material 11 along the lamination direction X of the graphenes 12. However, the way of increasing the exposed surface is not limited to the through holes 13, and the carbon material 11 may increase the exposed surfaces by providing recesses which do not completely penetrate the carbon material 11 along the lamination direction X of the graphenes 12. Note that the recesses can be formed, for example, by partially hollowing the front surface 11e of the carbon material 11.

Here, Table 1 shows examples of electrical resistivity of the surface (YZ-plane in Fig. 5) in the graphite sheet and the carbon felt that is nonwoven fabric. Note that the electrical resistivity on each of the graphite sheet and the carbon felt is a value measured by the four terminal method. As shown in Table 1, the carbon-based nonwoven fabric material as described in Patent Literature 1 has high contact resistance, and accordingly, has electrical resistivity as much as 10 times that of the graphite sheet. Such high electrical resistivity as described above leads to an increase of internal resistance of the microbial fuel cell, that is, a decrease of the output thereof. Therefore, use of the graphite sheet as the carbon material 11 makes it possible to reduce the internal resistance of the microbial fuel cells and to enhance the output thereof.

[Table 1]

| Carbon material | Electrical resistivity ($\Omega \cdot$m) |
|---|---|
| Carbon felt | $3.1 \times 10^{-3}$ |
| Graphite sheet | $3.5 \times 10^{-4}$ |

For example, each of the negative electrodes 10 according to this embodiment may be modified by electron transfer mediator molecules. Alternatively, the electrolysis solution 70 in the wastewater tank 80 may contain the electron transfer mediator molecules. In this way, the electron transfer from the anaerobic microbes to the negative electrode 10 is promoted, and more efficient wastewater treatment can be achieved.

Specifically, in the metabolic mechanism by the anaerobic microbes, electrons are transferred within cells or with final electron acceptors. When such mediator molecules are introduced into the electrolysis solution 70, the mediator molecules act as the final electron acceptors for metabolism, and deliver the received electrons to the negative electrode 10. As a result, it becomes possible to enhance an oxidative degradation rate of the organic matter and the like in the electrolysis solution 70. The electron transfer mediator molecules as described above are not particularly limited; however, for example there can be used at least one selected from the group consisting of neutral red, anthraquinone-2,6-disulfonic acid (AQDS), thionine, potassium ferricyanide, and methyl viologen.

(Positive electrode)

Each of the positive electrodes 20 in this embodiment has a function to react the oxygen, which is supplied from the gas phase 2, and the hydrogen ions and the electrons, which are generated in the negative electrode 10, with each other, and to generate water. Therefore, the positive electrode 20 of this embodiment is not particularly limited as long as the positive electrode 20 has a configuration of causing such a function. However, for example as shown in Fig. 2, it is preferable that the positive electrode 20 have a configuration of including at least the water-repellent layer 21 and the gas diffusion layer 22.

The water-repellent layer 21 is a layer having both water repellency and gas permeability. The water-repellent layer 21 is configured so as, while satisfactorily separating the gas phase 2 and the electrolysis solution 70 in an electrochemical system in the microbial fuel cell 1 from each other, to allow movement of gas, which shifts from the gas phase 2 to the electrolysis solution 70. That is, the water-repellent layer 21 is configured to allow permeation of oxygen in the gas phase 2, and to move the oxygen to the gas diffusion layer 22. It is preferable that the water-repellent layer 21 as described above be porous. In this case, the water-repellent layer 21 can have high gas permeability.

It is preferable that the gas diffusion layer 22 include, for example, a porous electroconductive material and a catalyst supported on the electroconductive material. Note that the gas diffusion layer 22 may be composed of a porous catalyst having electric conductivity.

In this embodiment, the water-repellent layer 21 in the positive electrode 20 is provided on the gas phase 2 side. Then, the surface 20a of the water-repellent layer 21, which is opposite with the gas diffusion layer 22, is exposed to the gas phase 2. In this way, the oxygen in the gas phase is supplied through the water-repellent layer 21 to the gas diffusion layer 22. Moreover, the gas diffusion layer 22 in the positive electrode 20 is in contact with the ion transfer layer 30 so as to face the negative electrode 10 via the ion transfer layer 30.

More specifically, it is preferable that the water-repellent layer 21 be a porous body having water repellency. In this case, the water-repellent layer 21 can have high gas permeability. It is preferable that the water-repellent layer 21 as described above be fabricated, for example, of at least one material selected from the group consisting of polytetrafluoroethylene (PTFE), dimethylpolysiloxane (PDMS), polyethylene (PE) and polypropylene (PP).

In order to efficiently supply oxygen to the gas diffusion layer 22 in the positive electrode 20, it is preferable that the water-repellent layer 21 be joined to the gas diffusion layer 22 via an adhesive. In this way, the diffused oxygen is directly supplied to the gas diffusion layer 22, and the oxygen reduction reaction can be carried out efficiently. From a viewpoint of ensuring adhesive properties between the water-repellent layer 21 and the gas diffusion layer 22, it is preferable that the adhesive be provided on at least a part between the water-repellent layer 21 and the gas diffusion layer 22. However, from a viewpoint of increasing the adhesive properties between the water-repellent layer 21 and the gas diffusion layer 22 and supplying oxygen to the gas diffusion layer 22 stably for a long period, it is more preferable that the adhesive be provided over the entire surface between the water-repellent layer 21 and the gas diffusion layer 22.

As the adhesive, an adhesive having oxygen permeability is preferable, and a resin can be used, which includes at least one selected from the group consisting of polymethyl methacrylate, methacrylic acid-styrene copolymer, styrene-butadiene rubber, butyl rubber, nitrile rubber, chloroprene rubber and silicone.

It is preferable that the gas diffusion layer 22 include, for example, a porous electroconductive material and a catalyst supported on the electroconductive material. Note that the gas diffusion layer 22 may be composed of a porous catalyst having electric conductivity.

The electroconductive material in the gas diffusion layer 22 can be composed, for example, of at least one material selected from the group consisting of a carbon-based substance, an electrically conductive polymer, a semiconductor and metal. Here, the carbon-based substance refers to a substance containing carbon as a constituent. Examples of the carbon-based substance include, for example: carbon powder such as graphite, activated carbon, carbon black, Vulcan (registered trademark) XC-72R, acetylene black, furnace black, and Denka Black; carbon fiber such as graphite felt, carbon wool and carbon woven fabric; carbon plate; carbon paper; and carbon disc. Moreover, the examples of the carbon-based substance also include microstructured substances such as carbon nanotubes, carbon nanohorns and carbon nanoclusters.

The electrically conductive polymer is a generic name of high molecular compounds having electric conductivity. Examples of the electrically conductive polymer include: polymers of single monomers or two or more monomers, which are composed of, as elements, aniline, amino phenol, diaminophenol, pyrrole, thiophene, paraphenylene, fluorene, furan, acetylene, or derivatives thereof. Specific examples of the electrically conductive polymer include polyaniline, polyaminophenol, polydiaminophenol, polypyrrole, polythiophene, polyparaphenylene, polyfluorene, polyfuran, polyacetylene and the like. For example, the electrically conductive metal material includes stainless steel mesh. Considering availability, cost, corrosion resistance, durability and the like, it is preferable that the electroconductive material be the carbon-based substance.

Moreover, it is preferable that a shape of the electroconductive material be a powdery shape or a fibrous shape. Furthermore, the electroconductive material may be supported on a support. The support means a member that itself has rigidity and can impart a constant shape to the gas diffusion layer 22. The support may be an electric insulator or an electric conductor. When the support is an electric insulator, examples of the support include glass pieces, plastics, synthetic rubbers, ceramics, paper subjected to waterproof or water-repellent treatment, plant pieces such as wood pieces, animal pieces such as bone pieces and shells, and the like. Examples of a support having a porous structure include porous ceramics, porous plastics, sponge and the like. When the support is an electric conductor, examples of the support include carbon-based substances such as carbon paper, carbon fiber and a carbon rod, metals, electrically conductive polymers, and the like. When the support is an electric conductor, such an electroconductive material that supports the carbon-based material to be described later is disposed on a surface of the support, whereby the support can also function as a current collector.

It is preferable that the catalyst in the gas diffusion layer 22 be an oxygen reduction catalyst. Moreover, the catalyst may be supported on surfaces and pore insides of the gas diffusion layer 22 using a binding agent. In this way, oxygen reduction properties of the gas diffusion layer 22 can be prevented from being degraded due to desorption of the catalyst from the surface and pore insides of the gas diffusion layer 22. Such a binding agent as described above is not particularly limited as long as the binding agent can bind the particles to one another. As the binding agent, for example, it is preferable to use at least one selected from the group consisting of polytetrafluoroethylene (PTFE), polyvinylidene fluoride (PVDF), an ethylene-propylene-diene copolymer (EPDM) and Nafion.

It is preferable that the oxygen reduction catalyst be a carbon-based material doped with metal atoms. The metal atoms are not particularly limited; however, it is preferable that the metal atoms be atoms of at least one type of metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum and gold. In this case, the carbon-based material exerts excellent performance particularly as a catalyst for promoting the oxygen reduction reaction. An amount of the metal atoms contained in the carbon-based material may be appropriately set so that the carbon-based material has excellent catalytic performance.

It is preferable that the carbon-based material be further doped with atoms of at least one nonmetal selected from nitrogen, boron, sulfur and phosphorus. An amount of such nonmetal atoms doped into the carbon-based material may also be appropriately set so that the carbon-based material has such excellent catalytic performance.

The carbon-based material is obtained, for example, in such a manner that a carbon-source raw material such as graphite and amorphous carbon is used as a base, and that this carbon-source raw material is doped with the metal atoms and the atoms of the at least one nonmetal selected from nitrogen, boron, sulfur and phosphorus.

Combinations of the metal atoms and the nonmetal atoms, which are doped into the carbon-based material, are appropriately selected. In particular, it is preferable that the nonmetal atoms include nitrogen, and that the metal atoms include iron. In this case, the carbon-based material can have particularly excellent catalytic activity. Note that the nonmetal atoms may be only nitrogen. Moreover, the metal atoms may be only iron.

The nonmetal atoms may include nitrogen, and the metal atoms may include at least either one of cobalt and manganese. In this case also, the carbon-based material can have particularly excellent catalytic activity. Note that the nonmetal atoms may be only nitrogen. Moreover, the metal atoms may be only cobalt, only manganese, or only cobalt and manganese.

The carbon-based material composed as the oxygen reduction catalyst can be prepared as follows. First, a mixture is prepared, which contains a nonmetal compound including at least one nonmetal selected from the group consisting of nitrogen, boron, sulfur and phosphorus, a metal compound, and the carbon-source raw material. Then, this mixture is heated at a temperature of 800 °C or more to 1000 °C or less for 45 seconds or more and less than 600 seconds. In this way, the carbon-based material composed as the oxygen reduction catalyst can be obtained.

As mentioned above, for example, graphite or amorphous carbon can be used as the carbon-source raw material. Moreover, the metal compound is not particularly limited as long as the metal compound is a compound including metal atoms capable of coordinate bond with the nonmetal atoms to be doped into the carbon-source raw material. As the metal compound, for example, there can be used at least one selected from the group consisting of: inorganic metal salt such as metal chloride, nitrate, sulfate, bromide, iodide and fluoride; organic metal salt such as acetate; a hydrate of the inorganic metal salt; and a hydrate of the organic metal salt. For example, when the graphite is doped with iron, it is preferable that the metal compound contain iron (III) chloride. Moreover, when the graphite is doped with cobalt, it is preferable that the metal compound contain cobalt chloride. Moreover, when the carbon-source raw material is doped with manganese, it is preferable that the metal compound contain manganese acetate. It is preferable that an amount of use of the metal compound be set so that a ratio of the metal atoms in the metal compound to the carbon-source raw material can stay within a range of 5 to 30 mass%, and it is more preferable that the amount of use of the metal compound be set so that this ratio can stay within a range of 5 to 20 mass%.

As described above, it is preferable that the nonmetal compound be a compound of at least one nonmetal selected from the group consisting of nitrogen, boron, sulfur and phosphorus. As the nonmetal compound, for example, there can be used at least one compound selected from the group consisting of pentaethylenehexamine, ethylenediamine, tetraethylenepentamine, triethylenetetramine, ethylenediamine, octylboronic acid, 1,2-bis(diethylphosphinoethane), triphenyl phosphite, and benzyl disulfide. An amount of use of the nonmetal compound is appropriately set according to a doping amount of the nonmetal atoms into the carbon-source raw material. It is preferable that the amount of use of the nonmetal compound be set so that a molar ratio of the metal atoms in the metal compound and the nonmetal atoms in the nonmetal compound can stay within a range of 1: 1 to 1: 2, and it is more preferable that the amount of use of the nonmetal compound be set so that this molar ratio can stay within a range of 1: 1.5 to 1: 1.8.

The mixture containing the nonmetal compound, the metal compound and the carbon-source raw material in the case of preparing the carbon-based material composed as the oxygen reduction catalyst can be obtained, for example, as follows. First, the carbon-source raw material, the metal compound, and the nonmetal compound are mixed with one another, and as necessary, a solvent such as ethanol is added to an obtained mixture, and a total amount of the mixture is adjusted. These are further dispersed by an ultrasonic dispersion method. Subsequently, after these are heated at an appropriate temperature (for example, 60 °C), the mixture is dried to remove the solvent. In this way, such a mixture containing the nonmetal compound, the metal compound and the carbon-source raw material is obtained.

Next, the obtained mixture is heated, for example, in a reducing atmosphere or an inert gas atmosphere. In this way, the nonmetal atoms are doped into the carbon-source raw material, and the metal atoms are also doped thereinto by the coordinate bond between the nonmetal atoms and the metal atoms. It is preferable that a heating temperature be within a range of 800 °C or more to 1000 °C or less, and it is preferable that a heating time be within a range of 45 seconds or more to less than 600 seconds. Since the heating time is short, the carbon-based material is efficiently produced, and the catalytic activity of the carbon-based material is further increased. Note that, preferably, a heating rate of the mixture at the start of heating in the heating treatment is 50 °C/s or more. Such rapid heating further enhances the catalytic activity of the carbon-based material.

Moreover, the carbon-based material may be further acid-washed. For example, the carbon-based material may be dispersed in pure water for 30 minutes by a homogenizer, and thereafter, the carbon-based material may be placed in 2M sulfuric acid and stirred at 80 °C for 3 hours. In this case, elution of the metal component from the carbon-based material is reduced.

By such a production method, a carbon-based material is obtained, in which contents of such an inactive metal compound and a metal crystal are significantly low, and electric conductivity is high.

(Ion transfer layer)

It is preferable that the microbial fuel cell 1 of this embodiment further include the ion transfer layers, which are provided between the negative electrodes 10 and the positive electrodes 20 and have hydrogen ion permeability. As shown in Fig. 1 to Fig. 4, the negative electrode 10 is separated from the positive electrode 20 via the ion transfer layer 30. The ion transfer layer 30 has a function to allow the permeation of the hydrogen ions generated at the negative electrode 10, and to move the generated hydrogen ions to the positive electrode 20.

As the ion transfer layer 30, for example, an ion exchange membrane using ion exchange resin can be used.

As the ion exchange resin, for example, NAFION (registered trademark) made by DuPont Kabushiki Kaisha, and Flemion (registered trademark) and Selemion (registered trademark) made by Asahi Glass Co., Ltd. can be used.

Moreover, as the ion transfer layer 30, a porous membrane having pores capable of allowing the permeation of the hydrogen ions may be used. That is, the ion transfer layer 30 may be a sheet having a space (air gap) for allowing the hydrogen ions to move between the negative electrode 10 and the positive electrode 20. Therefore, it is preferable that the ion transfer layer 30 have at least one selected from the group consisting of a porous sheet, a woven fabric sheet and a nonwoven fabric sheet. Moreover, at least one selected from the group consisting of a glass fiber membrane, a synthetic fiber membrane and a plastic nonwoven fabric can be used for the ion transfer layer 30, and the ion transfer layer 30 may be a laminated body formed by laminating a plurality of these on one another. Since such a porous sheet has a large number of pores in an inside thereof, it becomes possible for the hydrogen ions to move therethrough with ease. Note that a pore size of the ion transfer layer 30 is not particularly limited as long as the hydrogen ions can move from the negative electrode 10 to the positive electrode 20.

As mentioned above, the ion transfer layer 30 has such a function to allow the permeation of the hydrogen ions generated at the negative electrode 10, and to move the generated hydrogen ions to the positive electrode 20. Moreover, for example, if the negative electrode 10 and the positive electrode 20 are close to each other without contact, then the hydrogen ions can move from the negative electrode 10 to the positive electrode 20. Therefore, in the microbial fuel cell 1 of this embodiment, the ion transfer layer 30 is not an essential constituent. However, such provision of the ion transfer layer 30 makes it possible to efficiently move the hydrogen ions from the negative electrode 10 to the positive electrode 20, and therefore, it is preferable that the ion transfer layer 30 be provided from a viewpoint of enhancing the output.

Next, a description will be given of a function of the microbial fuel cell 1 according to this embodiment. When the microbial fuel cell 1 is operated, the electrolysis solution 70 that is the liquid to be treated and contains at least either one of the organic matter and the nitrogen-containing compound is supplied to each of the negative electrodes 10, and air or oxygen is supplied to each of the positive electrodes 20. At this time, the air is continuously supplied through an opening portion provided in an upper portion of the cassette substrate 50. Note that, preferably, the electrolysis solution 70 is also continuously supplied through a wastewater supply port 81 and a wastewater discharge port 82.

Then, in the positive electrode 20, air permeates the water-repellent layer 21 and is diffused by the gas diffusion layer 22. Moreover, in the negative electrode 10, hydrogen ions and electrons are generated from at least either one of the organic matter and the nitrogen-containing compound in the electrolysis solution 70 by the catalytic function of the microbes. The generated hydrogen ions permeate the ion transfer layer 30 and move to the positive electrode 20. Moreover, the generated electrons move to the external circuit 90 through the carbon material 11 of the negative electrode 10, and further, move from the external circuit 90 to the gas diffusion layer 22 of the positive electrode 20. Then, the hydrogen ions and the electrons, which have moved to the gas diffusion layer 22, are combined with oxygen by a function of the catalyst, and are consumed as water. At this time, the external circuit 90 recovers electrical energy flowing in such a closed circuit.

As described above, the microbial fuel cell 1 according to this embodiment includes: the negative electrodes 10, each of which is composed of the carbon material 11 formed by laminating the plurality of graphenes 12 on one another; and the positive electrodes 20 which face the negative electrodes 10. The negative electrodes 10 and the positive electrodes 20 are immersed in the electrolysis solution, and at least a part of each of the positive electrodes 20 is exposed to the gas phase 2. Then, in each of the negative electrodes 10, the area of the exposed surfaces of the carbon material 11 along the lamination direction X of the graphenes 12 with respect to the volume of the carbon material 11 is $1.0 \times 10^{-5}$ to 20 $cm^2/cm^3$. In this embodiment, the carbon material 11 formed by laminating the plurality of graphenes 12 on one another is used, and accordingly, the electric conductivity of the graphenes 12 in the direction (YZ-direction) perpendicular to the lamination direction X thereof can be enhanced. Then, the carbon material 11 has the exposed surfaces along the lamination direction X of the graphenes 12, whereby the electrons generated by the function of the anaerobic microbes are easily conducted to the graphenes 12. Accordingly, it becomes possible to enhance the output of the microbial fuel cell 1.

It is preferable that the negative electrode 10 have the through holes 13 which go along the lamination direction X of the graphenes. The formation of the through holes 13 increases the exposed surfaces of the carbon material 11. Accordingly, it becomes possible to further enhance the output of the microbial fuel cell 1. Note that the through holes 13 are particularly effective in the case of such a configuration in which the negative electrode 10, the ion transfer layer 30 and the positive electrode 20 are laminated on one another as shown in Fig. 1 to Fig. 3. That is, the through holes 13 are provided whereby the hydrogen ions generated on the surface 10b of the negative electrode 10 and the exposed surfaces of the insides of the through holes 13 easily move to the ion transfer layer 30 and the positive electrode 20 through the through holes 13. Therefore, it becomes possible to enhance the electric conductivity of the hydrogen ions, and to increase the efficiency of the oxygen reduction reaction.

Moreover, in the negative electrode 10, the upper surface 11a, lower surface 11b, right side surface 11c and left side surface 11d of the carbon material 11 may be formed into a wave form in order to increase the exposed surfaces of the carbon material 11.

The fuel cell unit 60 shown in Figs. 1 to 4 has a configuration in which the two electrode assemblies 40 and the cassette substrate 50 are laminated on one another. However, this embodiment is not limited to this configuration. For example, the electrode assembly 40 may be joined only to the one surface 53 of the cassette substrate 50, and other side surface thereof may be sealed by a plate member. Moreover, in the cassette substrate 50, the whole of the upper portion thereof is open; however, the upper portion may be partially open or may not be open as long as it is possible to introduce air (oxygen) into the inside of the cassette substrate 50.

The wastewater tank 80 holds the electrolysis solution 70 in the inside thereof, and may have a configuration through which the electrolysis solution 70 is circulated. For example, as shown in Fig. 1 to Fig. 3, the wastewater tank 80 may be provided with the wastewater supply port 81 for supplying the electrolysis solution 70 to the wastewater tank 80 and a wastewater discharge port 82 for discharging the treated electrolysis solution 70 from the wastewater tank 80.

Note that, preferably, the wastewater tank 80 is maintained in an anaerobic condition where, for example, molecular oxygen is absent or a concentration of the molecular oxygen is extremely small even if the molecular oxygen is present. In this way, it becomes possible to keep the electrolysis solution 70 in the wastewater tank 80 so that the electrolysis solution 70 can hardly contact oxygen.

EXAMPLES

Hereinafter, this embodiment will be described more in detail by examples, a comparative example and a reference example; however, this embodiment is not limited to these examples.

[Reference examples]

First, the front surface 11e and a back surface 11f of the graphite sheet, which are parallel to the YZ-plane, are masked, whereby only the exposed surfaces of the graphenes 12 along the lamination direction X thereof were exposed. In this way, a test piece of Reference example was fabricated. Note that, as the graphite sheet, Carbofit (registered trademark) made by Hitachi Chemical Co., Ltd. was used.

Moreover, the upper surface 11a, lower surface 11b, right side surface 11c and left side surface 11d of the graphite sheet, which are parallel to the X-axis, are masked, whereby only the front and back surfaces lie and 11f parallel to the YZ-plane were exposed. In this way, a test piece of Reference comparative example was fabricated.

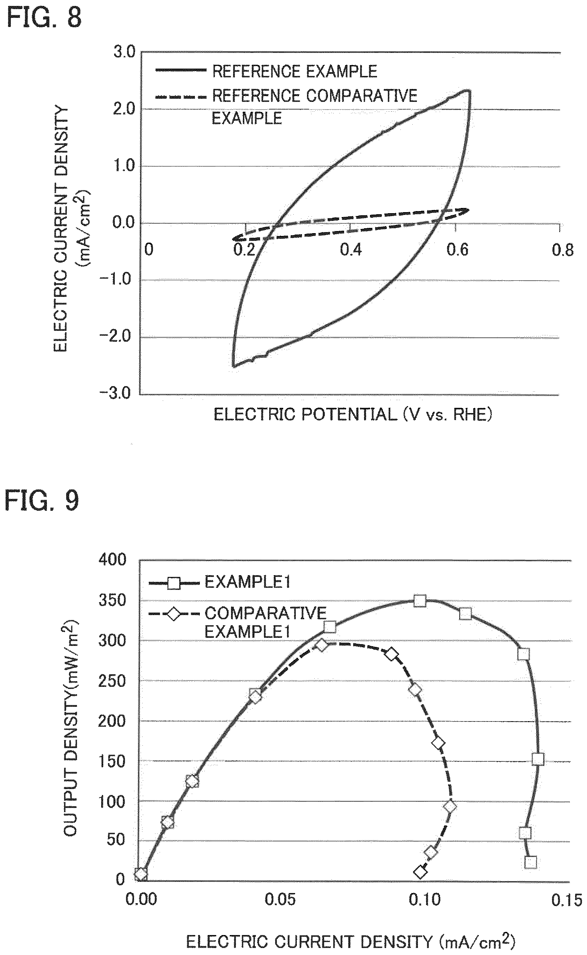

Then, the test pieces of Reference example and Reference comparative example were subjected to cyclic voltammetry (CV) evaluation in order to investigate electrochemical characteristics (electric double layer capacitances) thereof. Specifically, the test pieces of Reference example and Reference comparative example were subjected to CV measurement at room temperature at a sweep rate of 10 mV/s using $HClO_4$ with a concentration of 0.1 M as an electrolyte, using Ag|AgCl as a reference electrode, and using a Pt mesh as a counter electrode. Measurement results are shown in Fig. 8.

As shown in Fig. 8, in Reference example, a sum of absolute values of electric current density values at 0.4 V (vs RHE.) was 2.8. In contrast, in Reference comparative example, a sum of absolute values of electric current density values was 0.24. The above indicates that the exposed surfaces of the graphenes 12 in the lamination direction X cause an electrical reaction as large as approximately 11.6 times a reaction on the front and back surfaces 11e and 11f parallel to the YZ-plane.

[Example 1]

Each of negative electrodes of this example was fabricated as follows. First, a plurality of holes with a diameter of 5 mm were drilled in a graphite sheet. In this way, an area of exposed surfaces of the graphite sheet along a lamination direction of graphenes with respect to a volume of the graphite sheet was set to 1.63 $cm^2/cm^3$, and an area of front and back surfaces of the graphite sheet, which are parallel to the YZ-plane, were set to 50.7 $cm^2/cm^3$. Then, electric wires were adhered to end portions of the obtained graphite sheet using an electrically conductive epoxy resin, whereby the negative electrode of this example was fabricated. Note that, as the graphite sheet, Carbofit made by Hitachi Chemical Co., Ltd. was used. As the electrically conductive epoxy resin, an electrically conductive epoxy adhesive CW2400 made by Circuit Works Corporation was used.

Each of positive electrodes of this example was fabricated by supporting an oxygen reduction catalyst on the graphite sheet for use in the negative electrode. Specifically, the positive electrode was fabricated by dropping a dispersion liquid of the oxygen reduction catalyst on the graphite sheet and drying the dropped dispersion liquid.

Note that the oxygen reduction catalyst was prepared as follows. First, into a container, put were 3 g of carbon black, 0.1 M of an iron (III) chloride aqueous solution and 0.15 M of an ethanol pentaethylenehexamine solution, whereby a mixed solution was prepared. Note that, as the carbon black, Ketjen Black ECP600JD made by Lion Specialty Chemicals Co., Ltd. was used. An amount of use of the 0.1 M of iron (III) chloride aqueous solution was adjusted so that a ratio of iron atoms to the carbon black was 10% by mass. Ethanol was further added to this mixed solution, whereby a total amount thereof was adjusted to 9 mL. Then, this mixed solution was subjected to ultrasonic dispersion, and thereafter, was dried at a temperature of 60 °C by a dryer. In this way, a sample that contained carbon black, iron (III) chloride and pentaethylenehexamine was obtained.

Then, this sample was packed in one end of a quartz tube, and subsequently, an inside of this quartz tube was replaced with argon. This quartz tube was put into a furnace at 900 °C, and was pulled out after lapse of 45 seconds. When the quartz tube was inserted into the furnace, the quartz tube was inserted into the furnace while taking three seconds, whereby a heating rate for the sample at the start of heating was adjusted to 300 °C/s. Subsequently, argon gas was flown into the quartz tube, whereby the sample was cooled. In this way, an oxygen reduction catalyst was obtained. Moreover, the dispersion liquid of the oxygen reduction catalyst was adjusted by mixing 0.35 g of the powder oxygen reduction catalyst, 0.35 mL of a PTFE dispersion liquid and 2 mL of ion exchange water.

Next, a microbial fuel cell was fabricated using the negative electrodes and the positive electrodes, which were obtained as mentioned above. Note that the microbial fuel cell of this example did not use the ion transfer layers as shown in Fig. 1, and was set in the inside of the wastewater tank in a state where a gap of approximately 5 mm was provided between each negative electrode and each positive electrode. As an electrolysis solution as the liquid to be treated, a model liquid waste with total organic carbon (TOC) of 800 mg/L was used, and a temperature of the model liquid waste was set at 30 °C. Note that, in order to stabilize a proton supply capability, sodium hydrogen carbonate was added as a buffer to the electrolysis solution so that a concentration thereof became 5 mM. Moreover, a capacity of the wastewater tank was set to 300 cc. Furthermore, an inflow to the wastewater tank was adjusted so that a hydraulic retention time of the electrolysis solution became 24 hours.

The obtained microbial fuel cell was operated for one to two weeks, and a change of output characteristics thereof was investigated. Evaluation results are shown in Fig. 9. As shown in Fig. 9, a maximum output of the fuel cell in this example was 350 mW/m2, and good output characteristics were obtained.

[Comparative example 1]

Each of negative electrodes in this example was fabricated as follows. First, such drilling was not implemented for the same graphite sheet as in Example 1, and an upper surface, a lower surface, a right side surface and a left side surface in the graphite sheet, which are parallel to an X-axis thereof, were masked. In this way, only front and back surfaces parallel to a YZ-plane of the graphite sheet were exposed. In this way, an area of exposed surfaces of the graphite sheet along a lamination direction of graphenes with respect to a volume of the graphite sheet was set to 0 $cm^2/cm^3$, and an area of the front and back surfaces of the graphite sheet, which are parallel to the YZ-plane, with respect to a volume of the graphite sheet were set to 58.4 $cm^2/cm^3$. Then, in a similar way to Example 1, electric wires were adhered to end portions of the obtained graphite sheet using the electrically conductive epoxy resin, whereby each of the negative electrodes of this example was fabricated.

Then, in a similar way to Example 1, a microbial fuel cell of this example was fabricated using the same positive electrodes, electrolysis solution and wastewater tank as in Example 1. In a similar way to Example 1, the obtained microbial fuel cell was operated for one to two weeks, and a change of output characteristics thereof was investigated. As shown in Fig. 9, a maximum output of the fuel cell in this example was 300 $mW/m^2$, which was an inferior result to that in Example 1.

Here, while a sum of the area of the exposed surfaces and the area of the front and back surfaces parallel to the YZ-plane in the negative electrode of Example 1 was 52.33 $cm^2/cm^3$, a sum of the area of the exposed surfaces and the area of the front and back surfaces parallel to the YZ-plane in the negative electrode of Comparative example 1 was 58.4 $cm^2/cm^3$. That is, though such a total area of the negative electrode in Example 1 was smaller than in Comparative example 1, the microbial fuel cell of Example 1 achieved good output characteristics. The above proves that the exposed surfaces in the negative electrode have superior electric conductivity of the electrons generated in the anaerobic microbes to the front and back surfaces parallel to the YZ-plane in the negative electrode.

[Example 2]

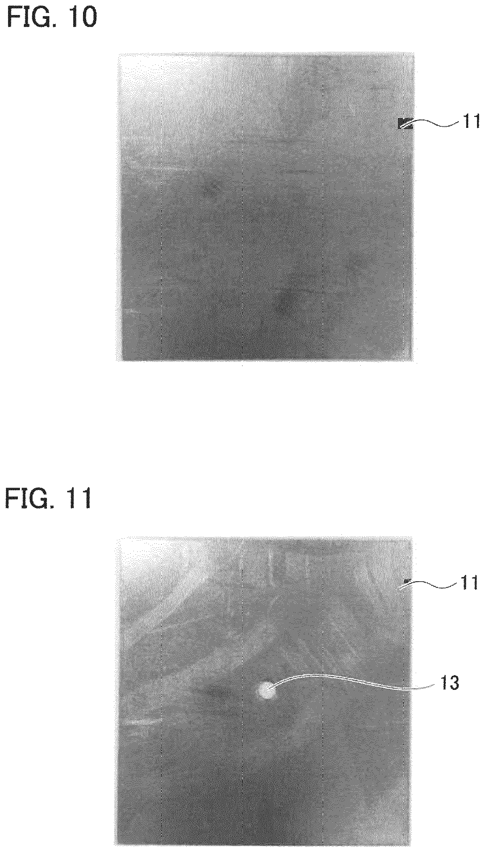

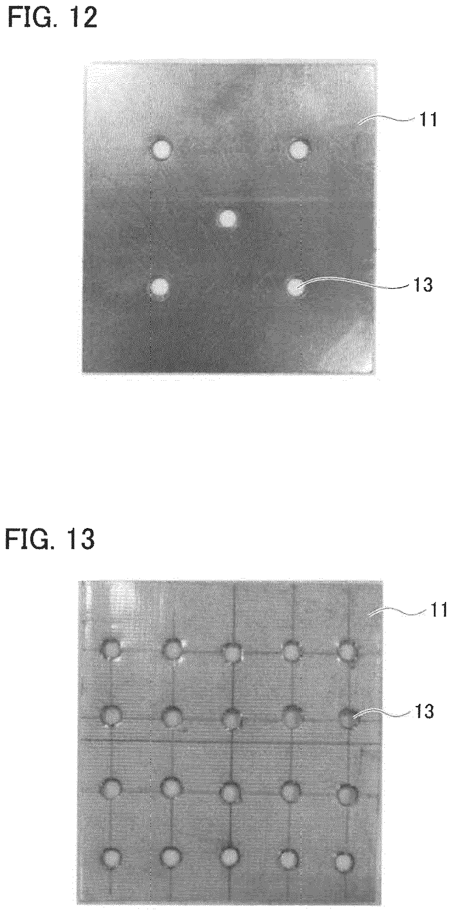

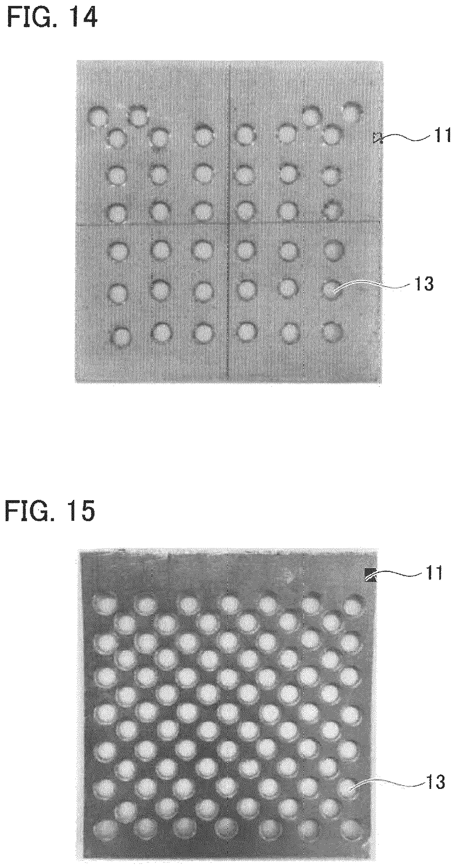

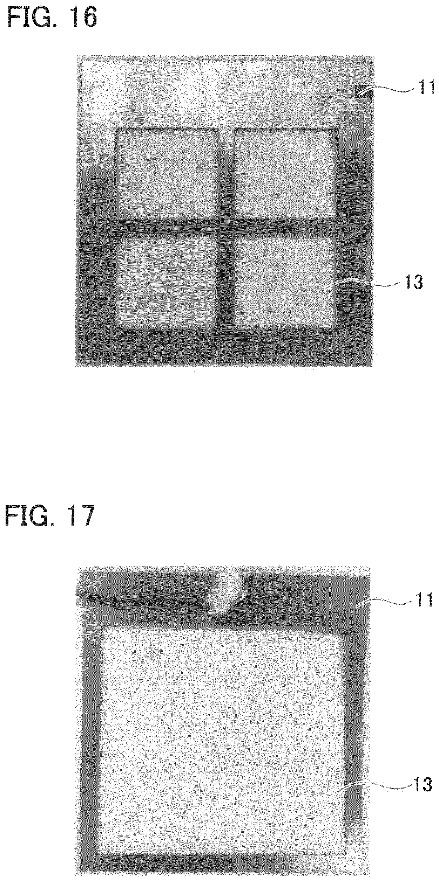

Each of negative electrodes in this example was fabricated as follows. First, graphite sheets with a length of 9 cm and a width of 8.5 cm were prepared. Next, the number and size of through holes in the graphite sheets were adjusted, whereby a plurality of negative electrodes different in exposed surface area and aperture ratio were fabricated. Note that Fig. 10 shows a graphite sheet with an exposed surface area of 0.36 $cm^2/cm^3$ and an aperture ratio of 0%. Fig. 11 shows a graphite sheet with an exposed surface area of 0.38 $cm^2/cm^3$ and an aperture ratio of 0.3%. Fig. 12 shows a graphite sheet with an exposed surface area of 0.48 $cm^2/cm^3$ and an aperture ratio of 1.3%. Fig. 13 shows a graphite sheet with an exposed surface area of 0.82 $cm^2/cm^3$ and an aperture ratio of 5.1%. Fig. 14 shows a graphite sheet with an exposed surface area of 1.26 $cm^2/cm^3$ and an aperture ratio of 10%. Fig. 15 shows a graphite sheet with an exposed surface area of 2.32 cm$^2$/cm$^3$ and an aperture ratio of 22%. Fig. 16 shows a graphite sheet with an exposed surface area of 1.07 cm$^2$/cm$^3$ and an aperture ratio of 42%. Fig. 17 shows a graphite sheet with an exposed surface area of 0.81 cm$^2$/cm$^3$ and an aperture ratio of 68%.

Then, electric wires were adhered to end portions of each of the obtained graphite sheets using an electrically conductive epoxy resin, whereby the negative electrode of this example was fabricated. Note that, as the graphite sheets, Carbofit made by Hitachi Chemical Co., Ltd. was used. As the electrically conductive epoxy resin, the electrically conductive epoxy adhesive CW2400 made by Circuit Works Corporation was used.

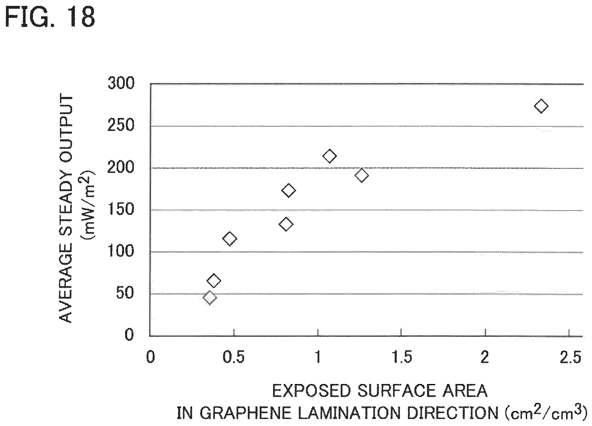

Then, in a similar way to Example 1, microbial fuel cells of this example were fabricated using the same positive electrodes, electrolysis solution and wastewater tank as in Example 1. In a similar way to Example 1, the obtained microbial fuel cells were operated for one to two weeks, and a change of output characteristics of each thereof was investigated. Measurement results are shown in Table 2 and Fig. 18.

[Table 2]

| Exposed surface area (cm$^2$/cm$^3$) | Aperture ratio (%) | Average steady output (mW/cm$^2$) |
|---|---|---|
| 0.36 | 0 | 46 |
| 0.38 | 0.3 | 66 |
| 0.48 | 1.3 | 116 |
| 0.81 | 68 | 133 |
| 0.82 | 5.1 | 173 |
| 1.07 | 42 | 214 |
| 1.26 | 10 | 191 |
| 2.32 | 22 | 273 |

Table 2 and Fig. 18 prove that an average steady output of the microbial fuel cell was enhanced as the exposed surface area of the negative electrode became larger. This also proves that the output of the microbial fuel cell was enhanced since the electron conductivity from the anaerobic microbes to the graphenes was increased as the exposed surfaces of the carbon material were larger. Moreover, this also proves that the output of the microbial fuel cell was enhanced more when the area of the exposed surfaces of the negative electrode is 0.4 cm$^2$/cm$^3$ or more.

Although this embodiment has been described above, this embodiment is not limited to these, and various modifications are possible within the scope of the spirit of this embodiment. Specifically, in the drawings, the negative electrodes 10, the positive electrodes 20 and the ion transfer layers 30 are formed into a rectangular shape. However, the shape of these is not particularly limited, and can be arbitrarily changed depending on a size of the fuel cell, desired power generation performance and the like. Moreover, the area of each of the layers can also be arbitrarily changed as long as desired functions can be exerted.

The entire contents of Japanese Patent Application No. 2016-146195 (filed on: July 26, 2016) are incorporated herein by reference.

INDUSTRIAL APPLICABILITY

In accordance with the present invention, the microbial fuel cell capable of increasing the electric conductivity of the electrodes and enhancing the output by the power generation can be obtained.

REFERENCE SIGNS LIST

1    Microbial fuel cell
2    Gas phase
10   Negative electrode
11   Carbon material
12   Graphene
13   Through hole
20   Positive electrode

30    Ion transfer layer
70    Electrolysis solution

**Claims**

1. A microbial fuel cell comprising:

   a negative electrode composed of a carbon material formed by laminating a plurality of graphenes on one another, in which an area of exposed surfaces of the carbon material, the exposed surfaces going along a lamination direction of the graphenes, with respect to a volume of the carbon material is $1.0 \times 10^{-5}$ to 20 $cm^2/cm^3$; and
   a positive electrode facing the negative electrode,
   wherein the negative electrode and the positive electrode are immersed in an electrolysis solution, and at least a part of the positive electrode is exposed to a gas phase.

2. The microbial fuel cell according to claim 1, wherein, in the negative electrode, the area of the exposed surfaces of the carbon material along the lamination direction of the graphenes with respect to the volume of the carbon material is 0.4 to 7 $cm^2/cm^3$.

3. The microbial fuel cell according to claim 1 or 2, wherein the negative electrode has through holes going along the lamination direction of the graphenes.

4. The microbial fuel cell according to claim 3, wherein an aperture ratio of the carbon material having the through holes is 1 to 70%.

5. The microbial fuel cell according to any one of claims 1 to 4, wherein the carbon material is a graphite sheet.

6. The microbial fuel cell according to any one of claims 1 to 5, further comprising an ion transfer layer having hydrogen ion permeability, the ion transfer layer being provided between the negative electrode and the positive electrode.

FIG. 1

EP 3 493 312 A1

FIG. 2

FIG. 3

FIG. 4

FIG. 5

(a)

(b)

EP 3 493 312 A1

# FIG. 6

(a)

(b)

# FIG. 7

| CIRCULAR HOLE | SQUARE HOLE | HEXAGONAL HOLE | OVAL HOLE |
|---|---|---|---|
| | | | |
| LONG RECTANGULAR HOLE | DIAMOND HOLE | CROSS CIRCULAR HOLE | CROSS HOLE |
| | | | |

## FIG. 8

## FIG. 9

FIG. 10

FIG. 11

FIG. 12

FIG. 13

FIG. 14

FIG. 15

## FIG. 16

## FIG. 17

FIG. 18

## INTERNATIONAL SEARCH REPORT

| | International application No. |
|---|---|
| | PCT/JP2017/019489 |

**A. CLASSIFICATION OF SUBJECT MATTER**
*H01M8/16*(2006.01)i, *H01M4/96*(2006.01)i, *H01M8/02*(2016.01)i

According to International Patent Classification (IPC) or to both national classification and IPC

**B. FIELDS SEARCHED**

Minimum documentation searched (classification system followed by classification symbols)
H01M8/16, H01M4/96, H01M8/02

Documentation searched other than minimum documentation to the extent that such documents are included in the fields searched
Jitsuyo Shinan Koho             1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2016/063455 A1 (Panasonic Corp.),<br>28 April 2016 (28.04.2016),<br>paragraphs [0021] to [0023], [0047], [0048],<br>[0050], [0056], [0060]; fig. 5<br>& CN 106575772 A | 1,2,5,6<br>3,4 |
| A | JP 2011-65875 A (Kurita Water Industries Ltd.),<br>31 March 2011 (31.03.2011),<br>(Family: none) | 1-6 |
| A | WO 2013/073284 A1 (National University<br>Corporation Toyohashi University of Technology),<br>23 May 2013 (23.05.2013),<br>& US 2014/315046 A1     & EP 2782180 A1<br>& CN 103931037 A | 1-6 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 July 2017 (28.07.17) | Date of mailing of the international search report<br>08 August 2017 (08.08.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014093185 A
- JP 2016146195 A